# EUROPEAN PATENT APPLICATION

(11) **EP 2 980 696 A1**
(43) Date of publication of application: **03.02.2016**
(21) Application number: 15178368.5
(22) Date of filing: 24.07.2015
(51) Int. Cl.: G06F 9/44

(54) **PREDICTIVE USER INTERFACE**

(30) Priority: 01.08.2014 US 201414449954
(71) Applicant: Services Petroliers Schlumberger, 75007 Paris (FR); Logined B.V., 2586 BJ S Gravenhage (NL)
(72) Inventor: BONETI, Carlos Santieri de Figueiredo, Houston, TX Texas 77057 (US); HOUETO, Fabien, Sugar Land, TX Texas 77479 (US); KIEHN, Bobby, Houston, TX Texas 77064 (US); LESSARD, Rodney, Houston, TX Texas 77027 (US)
(74) Representative: Li, Boxi

(57) **Abstract**

Methods, computing systems, and computer-readable media for organizing options in an interface. The method includes receiving data representing a type of domain object, and predicting one or more generic predicted events based at least in part on the type of domain object. The one or more generic predicted events are predicted using a generic predictor. The method also includes receiving data representing an actual next event, and updating the generic predictor based on the actual next event.

## Description

### Background

Software applications may have many different selectable options for initiating actions, processes, etc. that are available for a user to employ. Generally, the options are selectable using a user interface. The MICROSOFT^{®} WORD^{®} user interface is a familiar example. When open, at the top of the window (i.e., the "toolbar"), the interface provides a series of categories, such as "file," "home," "folder," "view," etc. One of a series of static ribbons immediately below the toolbar is shown or obscured, depending on which of the categories is selected. Within each ribbon are functions, actions, processes, etc., that may be selected.

As new versions of such software are developed, new functions, actions, processes, etc. may be added. Further, in more specialized and/or complex software packages, such as oilfield software applications, the number of options may be greater. Displaying all of the options may be cumbersome; as the number of options increases, the options may encroach on the working area of the user interface. Generally, some of the options are obscured, e.g., as part of a hierarchy of options, so as to minimize such encroachment and maintain an adequately-sized working area. However, this may make finding a desired option challenging, especially for an inexperienced user, since the user generally either needs to know where to find the option *a priori* or search for an option through the different views. Further, even if not obscured, the increasing number of options may make finding a particular option a time-consuming task.

One way to handle issues related to large numbers of selectable options in an interface is to provide a "favorites" toolbar or window, which may provide a list that is easily accessible and populated with options at the discretion of the user. However, inexperienced users may lack sufficient familiarity with the workflow to know which options should be in their favorites. Moreover, different options may be more frequently used depending on factors such as the context of the work being done in the working area of the interface or where a user is in a particular workflow, which may lead to the favorites toolbar being incomplete or too large to be helpful.

### Summary

Embodiments of the present disclosure may provide methods, computing systems, and computer-readable media for organizing options in an interface. The method includes receiving data representing a type of domain object, and predicting one or more generic predicted events based at least in part on the type of domain object. The one or more generic predicted events are predicted using a generic predictor. The method also includes receiving data representing an actual next event, and updating the generic predictor based on the actual next event.

The foregoing summary is provided to introduce a selection of concepts that are further described below in the detailed description. This summary is not intended to identify key or essential features of the claimed subject matter, nor is it intended to be used as an aid in limiting the scope of the claimed subject matter.

### Brief Description of the Drawings

The accompanying drawings, which are incorporated in and constitute a part of this specification, illustrate embodiments of the present teachings and together with the description, serve to explain the principles of the present teachings. In the figures:
Figure 1 illustrates a flowchart of a method for dynamically organizing an interface, according to an embodiment.
Figure 2 illustrates a conceptual, schematic view of a system for predicting events, according to an embodiment.
Figures 3-5 illustrate conceptual, schematic views of a specific predictor and a general predictor of the system, according to some embodiments.
Figure 6 illustrates a conceptual, schematic view of another system for predicting events, according to an embodiment.
Figure 7 illustrates a conceptual, schematic view of a specific predictor and a general predictor of the system of Figure 6, according to an embodiment.
Figure 8 illustrates a flowchart of another method for organizing options in an interface, according to an embodiment.
Figures 9-1 and 9-2 illustrate two views of a user-interface, according to an embodiment.
Figure 10 illustrates a schematic view of a processor system, according to an embodiment.

### Detailed Description

The following detailed description refers to the accompanying drawings. Wherever convenient, the same reference numbers are used in the drawings and the following description to refer to the same or similar parts. While several embodiments and features of the present disclosure are described herein, modifications, adaptations, and other implementations are possible, without departing from the spirit and scope of the present disclosure.

In general, embodiments of the present disclosure may provide systems, methods, and computer-readable media for providing a predictive, dynamic user interface, e.g., in an oilfield software application. The predictive user interface may develop or employ one or more "predictors" that predict next events that are likely to be implemented by a user, based on an object selected by the user and/or a previous event undertaken by the user. The "events" (previous and next) may be or include the selection of an object, the running of a simulation or analysis, or undertaking any other process, action, etc.

Predictors may be established based on historical usage by a user, a group of users, an organization, a commercialization team, or the like. Further, some predictors may be developed based on the usage of particular domain objects in a particular model, while others are built based on historical usage of object types in any model. This is explained in greater detail below.

In embodiments in which multiple predictors are employed, a ranking or hierarchy of predictors may be employed so as to prefer one predictor's predictions over another's. For example, the predictors that are closer to user-specific and related to historical usage of a specific object in a model, might, in an embodiment, be higher in the hierarchy over those that are either less specific (e.g., based on usage by groups of users) or based on usage of a generic type of object, or both less specific and generic. Additionally, some predictors may be based on the historical usage of the software application, model, object type, etc. by experts. Thus, the predictor may serve an additional purpose as suggesting next actions, based on how an expert would undertake a certain workflow.

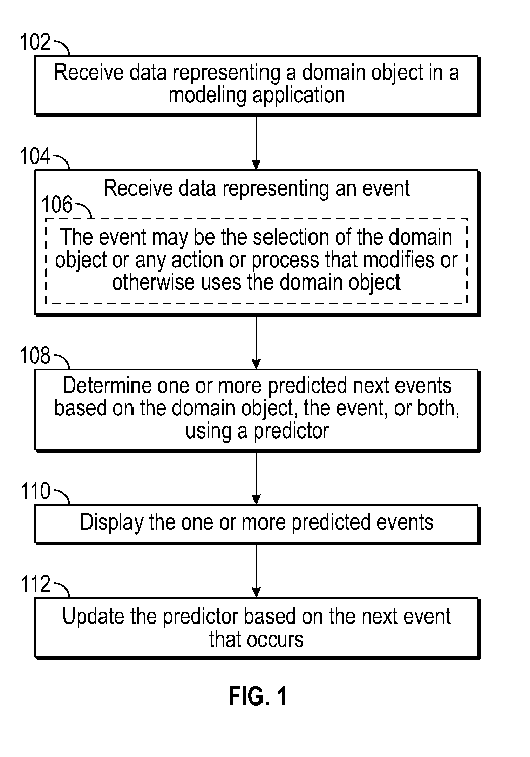

Turning now to the illustrated, example embodiments, Figure 1 illustrates a flowchart of a method 100 for dynamically organizing an interface, according to an embodiment. In some embodiments, the method 100 may be specifically tailored for use with oilfield software applications. Examples of such oilfield software applications include PETREL^{®}, AVOCET^{®}, ECLIPSE^{®} and PIPESIM^{®}, all of which are commercially-available from Schlumberger Technology Co. The method 100 may, however, also be tailored for use with any other oilfield software application, provided by any vendor, or any other type of software application.

The method 100 may begin by receiving data representing a domain object in a modeling application, as at 102. A "domain object" is an object that is, or may be added as, part of a model of a domain. In particular, a domain object may be any entity manipulated by the application. For example, in a well-modeling software application, a domain object may be a well. In a pipe system simulator, a domain object may be a segment of a well or pipe or a valve, etc. In a well system or completion modeling application, a domain object may be a casing, a pump or compressor, a packer, etc. It will be appreciated that the foregoing, non-limiting examples of domain objects are merely a few examples among many types of available domain objects.

The data received at 102 may include an object identifier associated with the selected domain object. The object identifier may be associated with a particular domain object represented in the modeling application. This may be referred to as an "object-specific identifier." For example, the modeling application may include a representation of several wells in a domain, and the object-specific identifier may uniquely identify one (or a specific grouping) of those several wells. The object identifier may also or instead be associated with a type of object. This may be referred to as an "object-type identifier," and may not uniquely identify any particular domain object, but rather may indicate a type of domain object. Continuing with the well-modeling example, the object-type identifier may be associated with the object type "wells" rather than with any specific well of the modeled domain.

Either or both of an object-specific identifier and an object-type identifier may be received at 102. In some embodiments, such as when creating a new domain object, an object-specific identifier may not exist, and thus may not be provided. In other embodiments, the object-specific identifier may be created and provided along with the object-type identifier. In some embodiments, a single number, parts of a single number or address, or other type of identifier may be used to identify both the object type and the specific object.

The method 100 may also include receiving data representing an event, as at 104, e.g., an "event identifier." An "event" may be considered an action or a process, or a combination thereof, depending on the context. The event may be associated with a domain object type and/or a specific domain object. For example, the event may be to create a new domain object, change the properties of a domain object, analyze a domain object, run a simulation using the domain object, delete or move the domain object, etc. Furthermore, in at least one embodiment, the event may be the selection of the domain object, or a particular type of domain object, the selection of which may have been received at 102. Accordingly, the data representing the event may also be the data that represents the domain object at 102.

The method 100 may then proceed to determining one or more predicted next events, e.g., based on the data representing the domain object and/or the data representing the event, as at 108. Such a determination may employ one or more "predictors." In various embodiments, a predictor may be or be analogous to a branch predictor. In some examples, the predictor may be a perceptron predictor, a neural network predictor, a saturating counter, or any other type of branch predictor. Additional details regarding specific embodiments of such predictors are provided below.

The method 100 may then proceed to displaying the one or more predicted events, as at 110. For example, the one or more predicted events may be partitioned from other options in an options menu. In a specific example, the one or more predicted events may appear as, or as part of, a ribbon of selectable options, with the predicted events being arranged in a particular, highly-noticeable area (e.g., all the way to one side or the top) of the ribbon. In an example, the predicted events may be displayed as part of a dynamic favorites list. However, in another embodiment, other display techniques may be employed, such as pop-up windows, highlighting, etc.

The method 100 may also include updating the predictor based on the next event that occurs (e.g., the "actual" next event), as at 112. For example, the method 100 may include recording the next event that is actually selected, notwithstanding what has been predicted. A "next event" may be or include the selection of a next object, the running of a simulation or analysis, or undertaking any other process. If the selection matches what was predicted, the prediction may be reinforced, indicating that it is more likely that this is the correct prediction the next time a combination of the object identifier and event identifier are received. If the selection does not match what was predicted, the predictor may record what would have been the correct prediction as what is actually selected, and may increase the likelihood associated with the selected action in comparison to the predicted (in such case, incorrectly) events. The predictor may thus track whether the prediction was correct, and may adjust its predictions accordingly. Any sort of heuristics may be employed for such tracking/updating, from simple counters to more complex branch prediction algorithms.

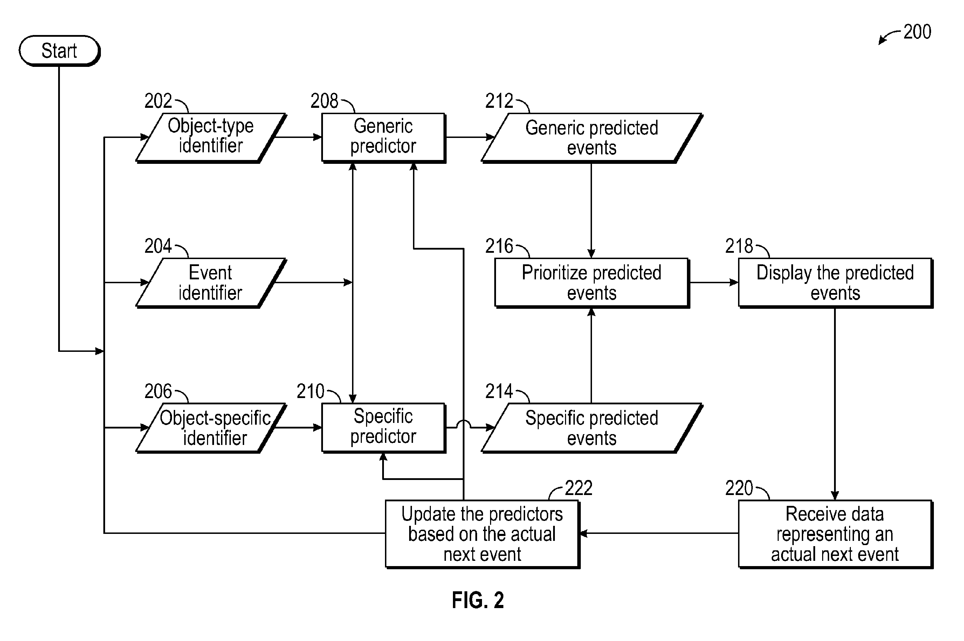

Figure 2 illustrates a conceptual, schematic view of a system 200 for predicting events, according to an embodiment. The system 200 may receive input including data representative of a domain object type (e.g., an object-type identifier 202) and data representative of an event (e.g., an event identifier 204). When available, the input may also include data representative of a specific domain object of the model (e.g., an object-specific identifier 206). The event identifier 204 may be paired with one or both of the object-type identifier 202 and/or the object-specific identifier 206, e.g., based on the event being related to the object-type or the specific object identified thereby.

The system 200 may also include a plurality of predictors that may receive the identifiers 202-206. For example, the illustrated embodiment of the system 200 includes a first or "generic" predictor 208 and a second or "specific" predictor 210. It will be appreciated, however, that any number of predictors may be employed. The generic predictor 208 may be configured to predict events based the object type, as indicated by the object-type identifier 202, while the specific predictor 210 may be configured to predict events based on the specific domain object, as indicated by the object-specific identifier 206. Thus, the specific and generic predictors 208, 210 may operate on different levels of "specificity" with respect to the domain objects. In an example, the generic predictor 208 may employ predetermined information related to typical workflows using the associated domain objects. The specific predictor 210 may employ information gathered (e.g., historical data) in association with the usage of a specific domain object.

Further, it will be appreciated that there may be several generic predictors 208 and/or specific predictors 210, each based on usage patters of different users; however, the specific predictors may remain specific to the domain object, while the generic predictors may remain "generic," relating to the type of domain object. In particular, for example, generic and/or specific predictors may be provided at a software application level, an organization level, team or group of users level, location-specific level, division or project level, workstation level, user-level, etc.. Such predictors may be characterized as "high-level" or "low-level" depending on the number of levels of abstraction between the user and the predictor. In particular, a predictor that predicts events based on the habits of a single user may be considered lower-level than a predictor that predicts events based on the habits of a group of users.

The generic and specific predictors 208, 210 may be or be analogous to branch predictors, as mentioned with respect to the predictor referenced in Figure 1. Accordingly, in an example in which the object-type identifier 202 and the object-specific identifier 206 are available, both the generic predictor 208 and the specific predictor 210 may operate in parallel to predict one or more next events. When active, the generic predictor 208 may produce generic predicted events 212, while the specific predictor 210 may produce specific predicted events 214. In cases where the object-specific identifier 206 is not available, the specific predictor 210 may not return specific predicted events 214, or may return an empty set thereof.

The system 200 may prioritize the predicted events at 216, e.g., as a combination of the generic and specific predicted events 212, 214. In some embodiments, the specific predicted events 212 may be favored over the generic predicted events 214, when available. Without being limited to theory, this may be based on an assumption that forecasts for a particular domain object, based on what is known about the usage of that particular domain object, may be more likely to be accurate then for generic, object-type forecasts, when the forecasts differ. Similarly, in embodiments with multiple generic or specific predictors, the "lower-level" (e.g., closer to the user) predictions may be favored over the "higher-level" predictions, e.g., accounting for variations among users, organization-specific workflows, etc.

The system 200 may include displaying the predicted events at 218, e.g., one or more specific predicted events and/or one or more generic predicted events, as prioritized at 216. The predicted events may be displayed in any suitable manner, for example, organized as or as part of options menus, such as ribbons, toolbars, etc., in a manner that draws attention to the predicted events. Further, for example, when a predicted next event includes selecting another domain object, the user interface may display the predicted event by highlighting the domain object that is predicted to be selected.

The user may then select an actual event, which may or may not be one of the predicted events. The system 200 may receive data representing the actual event, as at 220, e.g., via the user interface. Using this data, the system 200 may update the specific predictor 210, the generic predictor 208, or both. In some cases, the user-specific, organization-specific, or project-specific generic and/or specific predictors 208, 210 may be updated, while other, e.g., higher-level predictors 208, 210 may not be updated. For example, some predictors may be statically populated, as will be described in greater detail below. The system 200 may then use the data from the actual next event as the identifiers 202-206 for the next set of predictions.

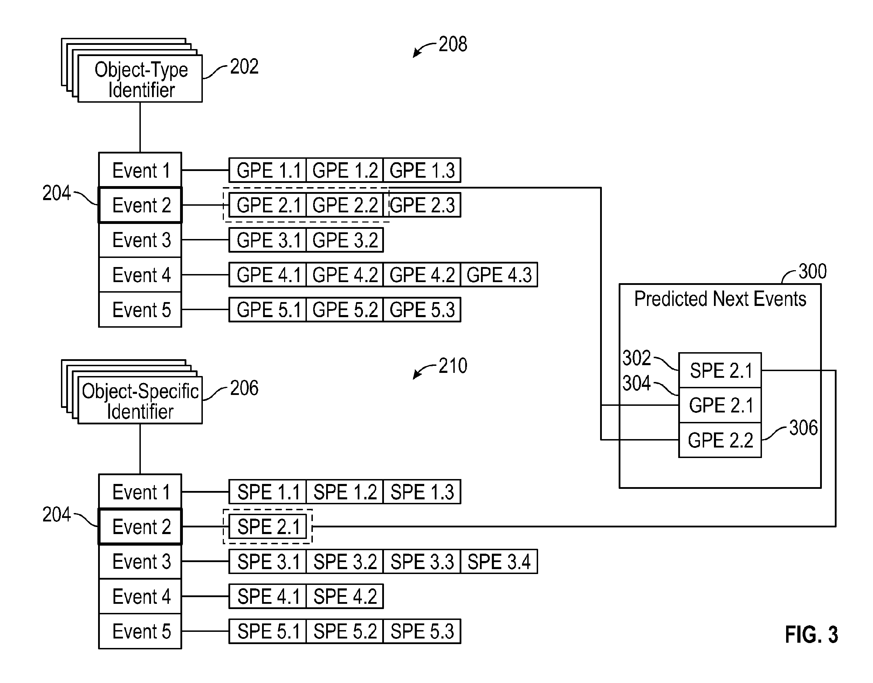

The predictors 208, 210 may each include a look-up table, which may be keyed to the inputs, such as the object-type identifier 202 and the object-specific identifier 206, respectively. The look-up tables may be configured in any suitable manner, using hash tables, linked lists, matrices, etc. Figure 3 illustrates an example of the generic predictor 208 and the specific predictor 210, according to an embodiment. In particular, the generic predictor 208 and the specific predictors 210 are, in this embodiment, arranged as a multi-level linked list.

For example, the generic predictor 208 may store a plurality of the object-type identifiers 202, e.g., as a linked list, vector, row of a matrix, etc. The object-type identifiers 202 may be stored in any suitable data structure, for example, in a manner that may facilitate quickly comparing a received object-type identifier and finding a matching object-type identifier in the plurality of object-type identifiers 202. A plurality of events (indicated as "Event 1," "Event 2," ... "Event 5"; although it will be appreciated that five events is arbitrarily chosen for purposes of description) may be associated with the object-type identifier 202. The events may represent some or all possible events that may occur in combination with the object-type identified by the object-type identifier 202, including selecting the type of object, creating a domain object of the object type, modifying a domain object of the object type, deleting a domain object of the object type, etc. Accordingly, as shown in Figure 2 and described above with reference thereto, the generic predictor 208 may receive the event identifier 204 as an input, which may be combined with the object-type identifier 202 as a pairing, for predicting the next event.

The pairing of the event identifier 204 and the object-type identifier 202 may result in a unique list of predicted next events being accessed by the generic predictor 208. These predictions are referred to herein as "generic predicted events" or "GPEs" as indicated in Figure 3. It will be appreciated that one or more higher-level generic predictors 208 may be employed using the same object-type identifier and event, which may result in one or more GPEs that may not match the GPEs of the illustrated generic predictor 208.

Further, the GPEs may be determined within the generic predictor 208 using any suitable process. For example, the generic predictor 208 may be pre-populated with common workflows. The generic predictor 208 may be trained by experts (e.g., experienced users within an organization), or other types of product testers (sometimes referred to as "commercialization teams") which may perform hundreds, thousands, or more trials to test the capabilities of a software package, determine efficient workflows for various use-cases, etc. Accordingly, the GPEs may serve to suggest the next event based on knowledge provided by experienced users for a particular type of domain object. This may facilitate knowledge dissemination or training, as an inexperienced user may be able to follow a workflow employed by more experienced users by following the predicted next event.

If there is no available object-specific identifier 206 (e.g., if a specific domain object is not selected, such as when the event is to create a domain object of the type associated with the object-type identifier), the predicted next events 300 may be set as the GPEs returned by the generic predictor 208 and associated with the object-type identifier 202 and the event identifier 204.

The system 200 may organize or otherwise favor the GPEs according to likelihood. In some cases, the likelihood may be determined by heuristics, by user preference (such as by inputting a ranking of generic predictors), or by favoring the GPEs forecasted by the lower-level generic predictors 208. Accordingly, if there are more GPEs than the desired number of predicted next events 300, the most-likely GPEs may be selected.

On the other hand, if the object-specific identifier is available, the specific predictor 210 may run in parallel with the generic predictor 208. Again, it will be appreciated that one or several specific predictors 210 may be run, e.g., at different levels of generality with respect to the user. Moreover, in team settings, a specific predictor 210 may be populated based on usage by a more experienced user, or more simply based on historical usage of a particular object among several users of the model. Thus, experience in general and with a particular model and/or object may be employed to streamline workflows by the predicted next events also serving as suggestions to the user.

The look-up table provided by the specific predictor 210 may be configured in any suitable manner, and may be the same or different from the manner in which the generic predictor 208 is setup. For example, the specific predictor 210 may include a linked-list, vector, table, matrix, or any other suitable data structure. Further, the specific predictor 210 may associate a plurality of the object-specific identifiers 206 with event identifiers 204. As illustrated, each object-specific identifier 206 and event identifier 204 pair may be associated with one or more specific predicted events ("SPEs"). These may be events that, based on history, statistical analysis, etc. are likely to occur next.

The SPEs and GPEs may or may not be overlapping. For a domain object of a given type and a given event, the pairing of the event identifier 204 and the object-specific identifier 206 may be associated with SPEs that are the same or different from the GPEs with which the object-type identifier 202 and event identifier 204 pairing are associated. That is, referring to Figure 3, for example, one or more of SPE 1.1, SPE 1.2, and SPE 1.3 may refer to the same predicted event as one or more of GPE 1.1, GPE 1.2, and GPE 1.3, but, in other cases, these may refer to six different events.

The generic predictor 208 and the specific predictor 210 may form part of a priority list or "hierarchy" of predictors. The hierarchy may be established such that the results of one predictor may be favored over another, e.g., when there are more predictions than slots 302-306. For example, in cases where both the generic predictor 208 and specific predictor 210 return predicted events based on an object-type identifier/event pairing and an object-specific identifier/event pairing, the GPEs and SPEs may be combined to result in the predicted next events 300, as shown in Figure 3. The SPEs may be higher in the ranking or hierarchy than the GPEs. Thus, the SPEs may be favored over the GPEs, in some embodiments, since the SPEs are specific to the particular domain object, whereas the GPEs apply to all domain objects of the same type. In embodiments in which there are multiple specific predictors and/or multiple generic predictors, the predictions from each may be favored according to a relative position in the hierarchy or list. The hierarchy may be established based on user-preference or organizational-preference, or may be predetermined and/or preset and static.

In the simple example of Figure 3, there are three slots 302, 304, 306 for the predicted next events 300. The object-specific identifier 206 is available, and the event identifier 204 represents Event 2. The number of SPEs associated with the object-specific identifier/event pairing is less than the number of slots 302-306 (e.g., one SPE 2.1 versus three predicted next events slots 302-306). Therefore, two GPEs may be selected to make up the shortfall; in this case, the GPEs are illustrated in sequence of likelihood (for illustrative purposes only), and thus GPE 2.1 and GPE 2.2 are used for slots 304, 306. This assumes that neither of the GPEs 2.1 and 2.2 are the same as the SPE 2.1. If either is the same, the next-most-likely GPE (GPE 2.3) may be selected, or the third slot 308 may remain empty.

It will be appreciated that any number of slots 302-306 may be employed, with the three illustrated being merely one example. Moreover, the number of slots 302-306 may not be static, but may change depending, for example, on any or a combination of the inputs, e.g., the object-type, the specific domain object, the event, the number of returned GPEs and/or SPEs, or any other factor.

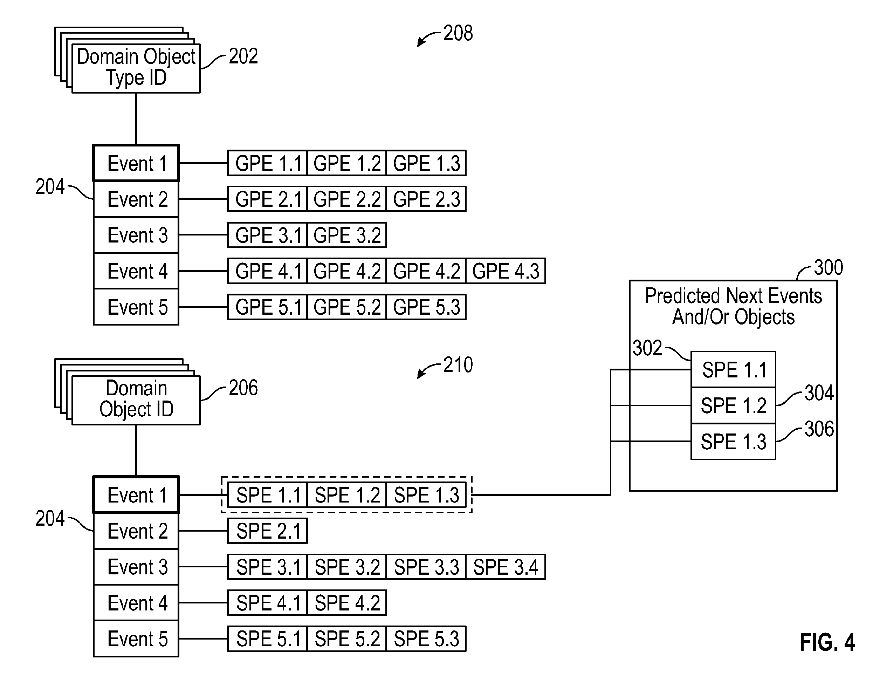

Referring now to Figure 4, the generic and specific predictors 208, 210 are again illustrated, according to a similar embodiment. In this case, however, the event identifier 204 represents Event 1, and the object-specific identifier 206 is available. Accordingly, three SPEs 1.1, 1.2, and 1.3 are returned and occupy the predicted next event slots 302-306. In this embodiment, the SPEs are prioritized over the GPEs and thus no GPEs are selected.

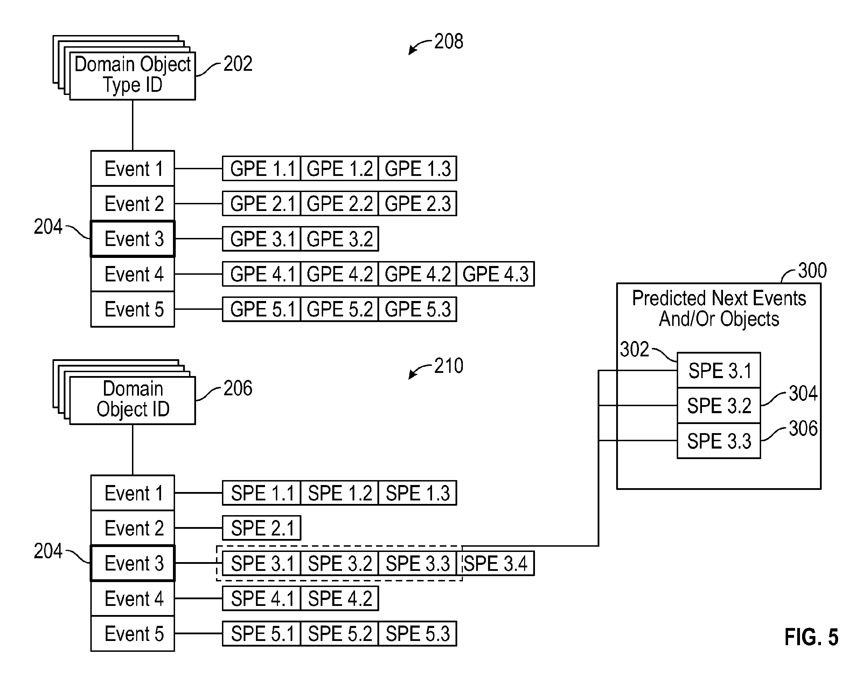

Figure 5 illustrates another case of the generic and specific predictors 208, 210. In this case, the object-specific identifier 206 and event identifier 204, and the object-type identifier 202 and event identifier 204, result in a selection of Event 3 in both of the generic and specific predictors 208, 210. The number of SPEs 3.1-3.4 associated with this event exceeds the number of available slots 302-306. Accordingly, the slots 302-306 are filled with a subset of the SPEs, e.g., according to likelihood. In the illustrated example, SPEs 3.1-3.3 are selected, and SPE 3.4, representative of the least-likely SPE of the set, is not selected. Again, the GPEs returned based on the object-type identifier 202 and event identifier 204 are not used, since the slots 302-306 are filled with the SPEs; however, in some cases, one or more GPEs may be prioritized over one or more SPEs and thus may be used instead of one or more of the SPEs.

As noted above, the system 200 may contain a feedback loop, whereby the specific predictor 210, the generic predictor 208, or both may be updated according to the actual next event selected. Accordingly, referring still to Figure 4, if SPE 1.3 is selected, this may suggest that SPE 1.3 should be arranged closer to the top of the SPE list associated with Event 1. Further, one or more of the GPEs associated with Event 1 may represent the same event as the selected SPE 1.3, and thus the general predictor 208 may be updated to reflect the increased likelihood of the GPE associated with the same next event as SPE 1.3. In some cases, none of the predicted next events 300 may be the actual next event, which may indicate that a new SPE and/or GPE may be added in association with the appropriate object-type identifier/event identifier and/or object-specific identifier/event identifier pairings.

Ranking of predicted events within the predictors 208, 210 may be conducted using a saturation counter, which may store the number of times an object-specific or object-type identifier and event pairing resulted in a particular event being selected. In other embodiments, more complex statistical measures may be employed in order to rank the predicted events. For example, a neural network may be used and trained by the user (or any other entity) to rank the predicted events based on complex relationships between objects, types, GPE, and SPE.

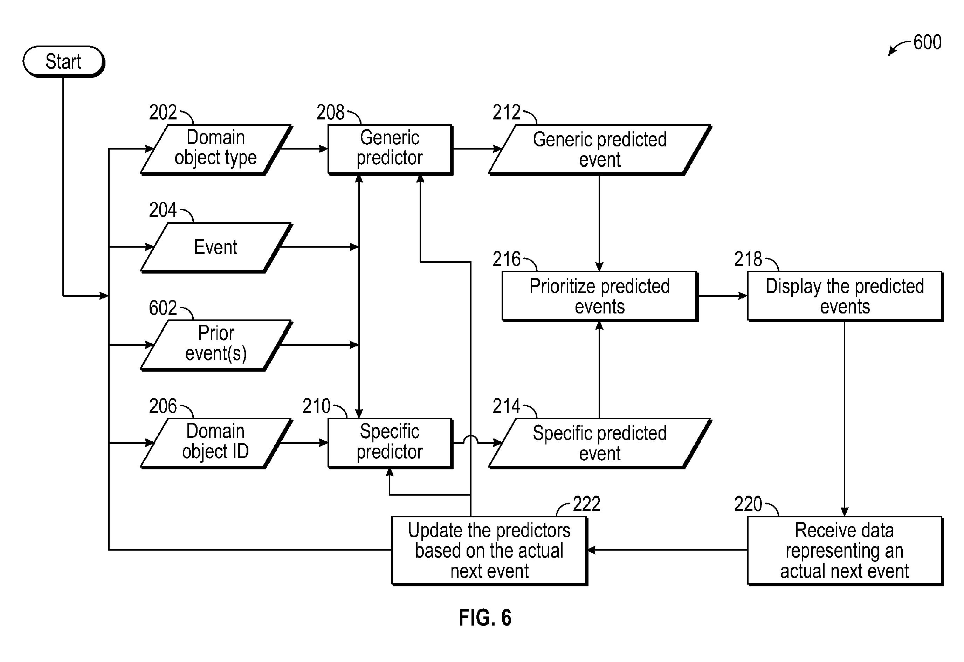

Figure 6 illustrates a schematic, conceptual view of another system 600 for predicting an event, according to an embodiment. The system 600 may be generally similar to the system 200, and like elements are given like reference numerals and are not described in duplicate herein. The system 600 may receive data representing one or more prior events 602 as input into the generic and/or specific predictors 208, 210, in addition to the identifiers 202-206.

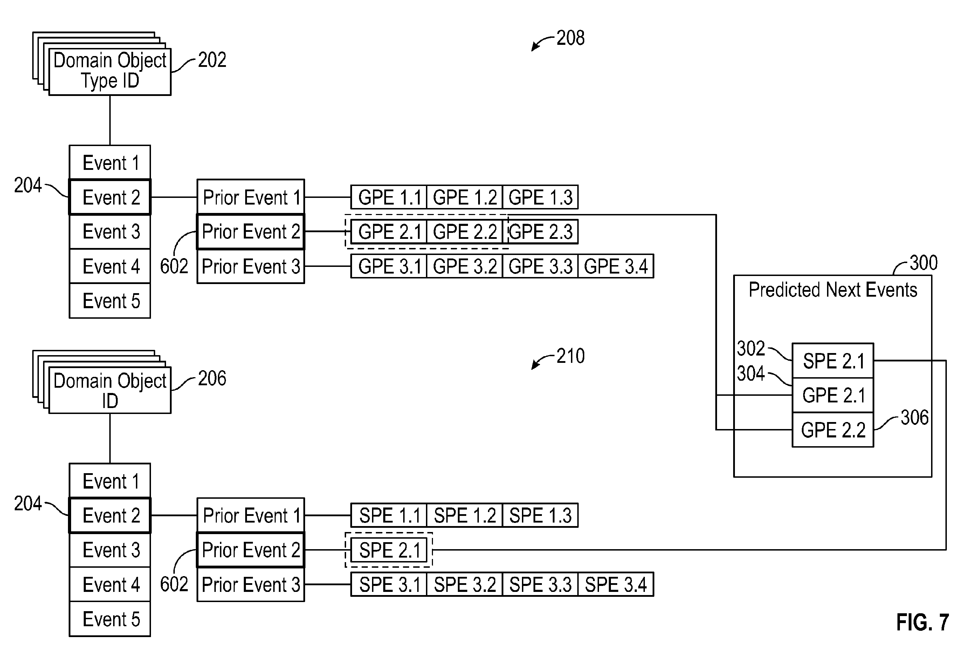

Referring now additionally to Figure 7, there is illustrated a conceptual, schematic view of another embodiment of the generic and specific predictors 208, 210, which employs the prior event(s) 602 as input. As shown, the events associated with an object-type identifier 202 or an object-specific identifier 206 may be linked to one or more prior events, as shown. This may be in addition to linking the event identifiers 204 to predicted events. For example, if the illustrated object-specific identifier 206 is input, along with an event identifier 204 associated with Event 2, the specific predictor 210 may first determine if the prior event 602 loaded as input matches one of the prior events linked with the event/object-specific identifier pairing. In some embodiments, if there is no match, this may be the end of the inquiry, and an empty set may be returned, or another predictor may be employed. In other embodiments, if there is no match, the specific predictor 210 may proceed to selecting one or more SPEs associated directly with the object-specific identifier/event pairing (e.g., ignoring the prior event 602). If there is a match with a prior event, however, one or more SPEs may be returned that are associated with the object-specific identifier/event pairing and the prior event 602. It will be appreciated that the GPE selection may proceed similarly, and the GPEs and SPEs returned may be selected and/or prioritized in any suitable manner, for example, as described above. Moreover, any number of intermediate levels (e.g., prior events 602) may be employed, without limitation.

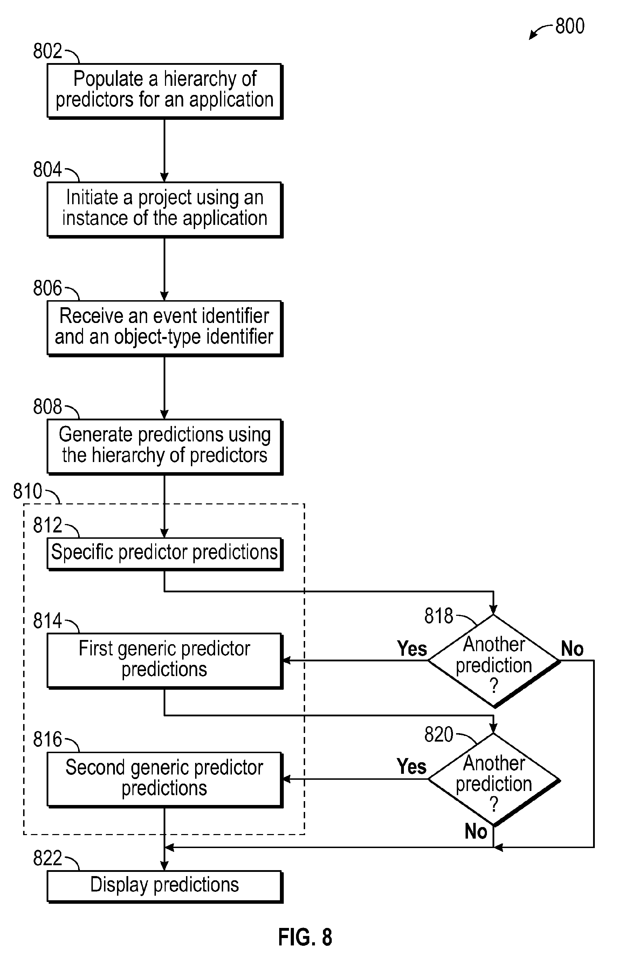

Figure 8 illustrates another method 800 for dynamically organizing an interface, according to an embodiment. The method 800 may begin by populating one or more predictors of a hierarchy of predictors for an application, as at 802. The hierarchy of predictors may include one or more generic predictors 208 (see, e.g., Figure 6) and one or more specific predictors 210 (see, e.g., Figure 6). One or more of the generic predictors 208 and/or specific predictors 210 may be populated by one or more experts, testers, or otherwise experienced users, and may be static from the perspective of the end-user. Such a "high-level" predictor may be populated by tracking the history and/or tendencies of processes conducted by users who are considered to be efficient or otherwise worthy of copying. In a particular example, the developer or vender of the software may employ a commercialization team to populate the high-level predictor. In addition, one or more of the generic predictors 208 and/or specific predictors 210 of the hierarchy may be populated by tracking user history.

The method 800 may then proceed to initiating a project using an instance of the application, as at 804. For example, block 804 may occur by operation of a processor system executing the software application, controlled by a user. In other embodiments, a third-party or the vendor (such as a cloud-computing provider) may provide the processor(s) to execute the software application and/or the application may be controlled by a third-party or another user. Furthermore, executing the application as part of the project at 804 may include displaying a user interface, which may include a working window and a toolbar with one or more selectable options. The options may include events, objects, or both.

The method 800 may also include generating predictions using the hierarchy of predictors, as at 808. The hierarchy of predictors is represented schematically at 810. As shown, the predictors of the hierarchy 810 generate three sets of predictions, as at 812, 814, and 816. For example, the specific predictor 210 predictions may be the first option in the hierarchy 810, and thus the method 800 may include first collecting the predictions from the specific predictor, as indicated at block 812.

After selecting one or more predictions generated by the specific predictor, the method 800 may determine whether additional predictions are to be considered, as at 818. If additional predictions are to be considered, the method 800 may, in an embodiment, refer to the predictions generated by a first generic predictor, as at block 814. The method 800 may then again include determining whether additional predictions are to be considered, as at 810, and if the determination is that additional predictions are to be considered, may refer to predictions generated by a second generic predictor, as at block 816. This process of collecting predictions and, if needed, proceeding to a next predictor in a hierarchy may continue for as long as additional predictions are to be considered and as long as there are additional predictors from which predictions may be collected. Once either of those conditions is not met, the method 800 may proceed to displaying the predictions, as at 822, in any suitable manner.

Although the illustrated hierarchy indicates the specific predictor (e.g., the specific predictor 210 as shown in and described above with reference to Figures 2-6) at the top (e.g., the first predictor to be considered) in the hierarchy, it will be appreciated that one or more generic predictors 210 (e.g., Figure 6) may be higher in the hierarchy than the specific predictor. Further, multiple specific predictors may be employed in any suitable rank in the hierarchy. Moreover, although three predictors' predictions are illustrated in Figure 8, it will be appreciated that any number of predictors may be employed.

Furthermore, the method 800 is not necessarily limited to collecting all of the predictions from successive predictors in the hierarchy, but may, for example, select one or any subset of the predictions and then proceed to the predictions from the next predictor in a hierarchy. Moreover, in at least one embodiment, the method 800 may include collecting all of the predictions from all of the predictors, and then determining which among them is (or are) the most likely, and selecting the predictions for display from among those most likely. It will be appreciated that any suitable manner of progressing through a hierarchy of predictors, whether simultaneously or chronologically in sequence, to collect predictions therefrom may be employed without departing from the scope of the present disclosure.

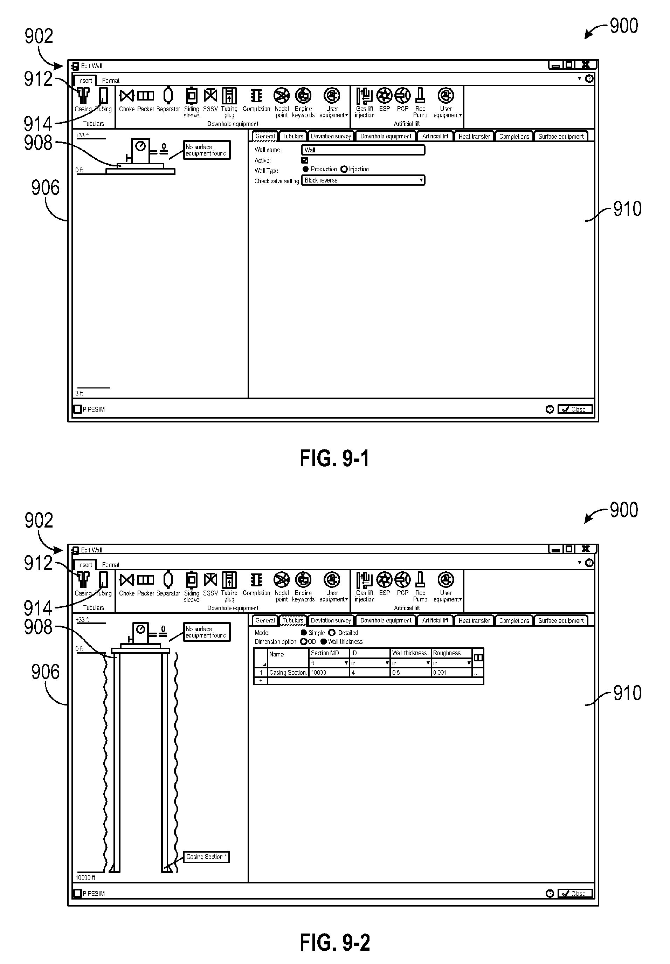

Figures 9-1 and 9-2 illustrate a user interface 900 with an option menu 902 that is dynamically updated using one or more embodiments of the method 100 and/or 800 and/or the system 200 and/or 600, according to an embodiment. As shown, in addition to the options menu 902, the user interface 900 may include one or more working windows. In this embodiment, a first working window 906 provides a visual depiction of elements of a well completion assembly 908, and a second working window 910 provides a visual display of characteristics associated with the various elements of the well completion assembly 908.

In particular, Figure 9-1 may illustrate a view of a well-simulation project after an instance of a well has been created. It will be appreciated that this is merely one illustrative example and not to be considered limiting. Referring now additionally to Figure 2, to reach the state of the user interface 900 shown in Figure 9-1, an event identifier 204 associated with "create well" was received as input, along with an object-type identifier 202 associated with the domain object type "well." An object-specific identifier 206 may not be provided, since the well has yet to be created, prior to the state of the user interface 900 in Figure 9-1. In other embodiments, the object-specific identifier 206 may be assigned and provided as input into the system 200 (and/or 600); however, since there may be no history associated with the new object-specific identifier, the specific predictor 210 may not provide meaningful predictions.

Upon receiving the object-type identifier and the event identifier, the general predictor 208 may determine that the most likely next event is "add a casing." However, some wells may be uncased, so another likely event may be "add a tubing." As shown, the options menu 902 includes an icon 912 for adding a casing and an icon 914 for adding a tubing, which are presented prominently, in this example, at the far left (e.g., in languages read left-to-right).

Referring now to Figure 9-2, the actual next event was to add a casing, which was, as noted above, one of the predicted events (icon 912). The system 200 (and/or 600) may thus receive confirmation that one of its predicted events occurred, and may thus alter the generic and/or the specific predictor for the object-type well and/or for the particular well being built using the user interface (e.g., represented by the object-specific identifier). Adding the casing to the well may then serve as at least part of the input for the next round of predictions (other inputs may include, e.g., the prior event of creating the well).

The predicted events need not be displayed adjacently or contiguously in a single options menu 902, although they may be. For example, the predicted events may be different types of events, such as the selection of another object, the creation of another object, the performance of a process such as an analysis, test, or simulation etc. Accordingly, if the selection of an object is one of the next predicted events, the object may be highlighted, e.g., in the first working window 906. The icons for the predicted objects or processes may be provided in a separate window. In another embodiment, icons for the creation of objects may be separate from icons for the performance of processes such as analyses, tests, and simulations. Thus, predicted object creation icons may be at the left (or highlighted, or positioned at another prominent location) of a group of available creation icons, while the predicted process icons are at the left (or highlighted, or positioned at another prominent location) of a group of available process icons.

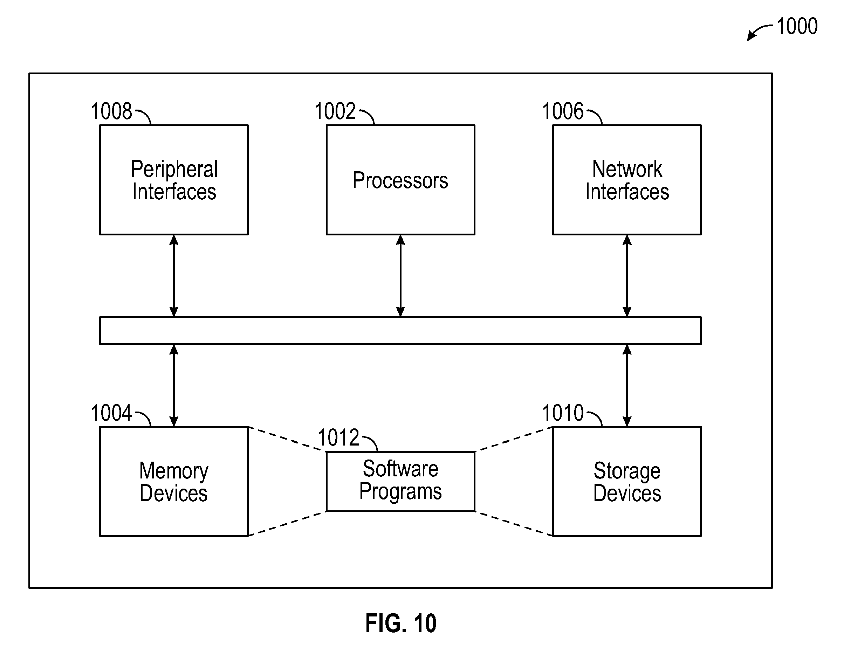

Embodiments of the disclosure may also include one or more systems for implementing one or more embodiments of the methods 100, 800 and/or systems 200, 600. Figure 10 illustrates a schematic view of such a computing or processor system 1000, according to an embodiment. The processor system 1000 may include one or more processors 1002 of varying core configurations (including multiple cores) and clock frequencies. The one or more processors 1002 may be operable to execute instructions, apply logic, etc. It will be appreciated that these functions may be provided by multiple processors or multiple cores on a single chip operating in parallel and/or communicably linked together. In at least one embodiment, the one or more processors 1002 may be or include one or more GPUs.

The processor system 1000 may also include a memory system, which may be or include one or more memory devices and/or computer-readable media 1004 of varying physical dimensions, accessibility, storage capacities, etc. such as flash drives, hard drives, disks, random access memory, etc., for storing data, such as images, files, and program instructions for execution by the processor 1002. In an embodiment, the computer-readable media 1004 may store instructions that, when executed by the processor 1002, are configured to cause the processor system 1000 to perform operations. For example, execution of such instructions may cause the processor system 1000 to implement one or more portions and/or embodiments of the method(s) described above.

The processor system 1000 may also include one or more network interfaces 1006. The network interfaces 1006 may include any hardware, applications, and/or other software. Accordingly, the network interfaces 1006 may include Ethernet adapters, wireless transceivers, PCI interfaces, and/or serial network components, for communicating over wired or wireless media using protocols, such as Ethernet, wireless Ethernet, etc.

As an example, the processor system 1000 may be a mobile device that includes one or more network interfaces for communication of information. For example, a mobile device may include a wireless network interface (e.g., operable via one or more IEEE 802.11 protocols, ETSI GSM, BLUETOOTH®, satellite, etc.). As an example, a mobile device may include components such as a main processor, memory, a display, display graphics circuitry (e.g., optionally including touch and gesture circuitry), a SIM slot, audio/video circuitry, motion processing circuitry (e.g., accelerometer, gyroscope), wireless LAN circuitry, smart card circuitry, transmitter circuitry, GPS circuitry, and a battery. As an example, a mobile device may be configured as a cell phone, a tablet, etc. As an example, a method may be implemented (e.g., wholly or in part) using a mobile device. As an example, a system may include one or more mobile devices.

The processor system 1000 may further include one or more peripheral interfaces 1008, for communication with a display screen, projector, keyboards, mice, touchpads, sensors, other types of input and/or output peripherals, and/or the like. In some implementations, the components of processor system 1000 need not be enclosed within a single enclosure or even located in close proximity to one another, but in other implementations, the components and/or others may be provided in a single enclosure. As an example, a system may be a distributed environment, for example, a so-called "cloud" environment where various devices, components, etc. interact for purposes of data storage, communications, computing, etc. As an example, a method may be implemented in a distributed environment (e.g., wholly or in part as a cloud-based service).

As an example, information may be input from a display (e.g., a touchscreen), output to a display or both. As an example, information may be output to a projector, a laser device, a printer, etc. such that the information may be viewed. As an example, information may be output stereographically or holographically. As to a printer, consider a 2D or a 3D printer. As an example, a 3D printer may include one or more substances that can be output to construct a 3D object. For example, data may be provided to a 3D printer to construct a 3D representation of a subterranean formation. As an example, layers may be constructed in 3D (e.g., horizons, etc.), geobodies constructed in 3D, etc. As an example, holes, fractures, etc., may be constructed in 3D (e.g., as positive structures, as negative structures, etc.).

The memory device 1004 may be physically or logically arranged or configured to store data on one or more storage devices 1010. The storage device 1010 may include one or more file systems or databases in any suitable format. The storage device 1010 may also include one or more software programs 1012, which may contain interpretable or executable instructions for performing one or more of the disclosed processes. When requested by the processor 1002, one or more of the software programs 1012, or a portion thereof, may be loaded from the storage devices 1010 to the memory devices 1004 for execution by the processor 1002.

Those skilled in the art will appreciate that the above-described componentry is merely one example of a hardware configuration, as the processor system 1000 may include any type of hardware components, including any necessary accompanying firmware or software, for performing the disclosed implementations. The processor system 1000 may also be implemented in part or in whole by electronic circuit components or processors, such as application-specific integrated circuits (ASICs) or field-programmable gate arrays (FPGAs).

The foregoing description of the present disclosure, along with its associated embodiments and examples, has been presented for purposes of illustration only. It is not exhaustive and does not limit the present disclosure to the precise form disclosed. Those skilled in the art will appreciate from the foregoing description that modifications and variations are possible in light of the above teachings or may be acquired from practicing the disclosed embodiments.

For example, the same techniques described herein with reference to the processor system 1000 may be used to execute programs according to instructions received from another program or from another processor system altogether. Similarly, commands may be received, executed, and their output returned entirely within the processing and/or memory of the processor system 1000. Accordingly, neither a visual interface command terminal nor any terminal at all is strictly necessary for performing the described embodiments.

Likewise, the steps described need not be performed in the same sequence discussed or with the same degree of separation. Various steps may be omitted, repeated, combined, or divided, as necessary to achieve the same or similar objectives or enhancements. Accordingly, the present disclosure is not limited to the above-described embodiments, but instead is defined by the appended claims in light of their full scope of equivalents. Further, in the above description and in the below claims, unless specified otherwise, the term "execute" and its variants are to be interpreted as pertaining to any operation of program code or instructions on a device, whether compiled, interpreted, or run using other techniques.

## Claims

1. A method for organizing options in an interface, comprising:
receiving data representing a type of domain object;
predicting, using a processor, one or more generic predicted events based at least in part on the type of domain object, wherein the one or more generic predicted events are predicted using a generic predictor;
receiving data representing an actual next event; and
updating the generic predictor based on the actual next event.

2. The method of claim 1, further comprising receiving data representing an event conducted in association with the type of domain object, wherein predicting the one or more generic predicted events is based at least in part on the event.

3. The method of any preceding claim, wherein the event comprises selecting the type of domain object, selecting a specific domain object, performing a process using the type of domain object, or taking an action using the type of domain object.

4. The method of any preceding claim, further comprising:
receiving data representing a specific domain object of a model; and
predicting, using a processor, one or more specific predicted events based at least in part on the specific domain object, wherein the one or more specific predicted events are predicted using a specific predictor.

5. The method of claim 4, further comprising updating the specific predictor using the actual next event.

6. The method of claim 4 or 5, further comprising selecting one or more predicted next events from among the generic predicted events and the specific predicted events.

7. The method of claim 6, wherein selecting the one or more predicted next events comprises prioritizing at least some of the specific predicted events over at least some of the generic predicted events.

8. The method of any of claims 4-7, further comprising constructing a hierarchy of predictors comprising a ranking of two or more predictors including at least the specific predictor and the generic predictor, wherein predicting the one or more generic predicted events and predicting the one or more specific predicted events comprises selecting predictions from the two or more predictors according to a rank thereof in the hierarchy.

9. The method of any of claims 4-7, wherein the generic predictor is static with respect to at least one user's use history and the specific predictor is populated based on the at least one user's use history.

10. The method of any preceding claim, further comprising receiving data representing one or more prior events, wherein predicting the one or more generic predicted events is further based on the one or more prior events.

11. The method of any preceding claim, wherein the domain object is an object used in an oilfield software application, and the one or more predicted generic events comprise selecting another domain object, performing an oilfield process, performing an oilfield action, or both.

12. A computer-readable medium storing instructions that, when executed by a processor, cause the processor to perform operations, the operations comprising:
receiving data representing a type of domain object;
predicting one or more generic predicted events based at least in part on the type of domain object, wherein the one or more generic predicted events are predicted using a generic predictor;
receiving data representing an actual next event; and
updating the generic predictor based on the actual next event.

13. The media of claim 12, wherein the event comprises selecting the type of domain object, selecting a specific domain object, performing a process using the type of domain object, or taking an action using the type of domain object.

14. The media of claim 12 or 13, further comprising:
receiving data representing a specific domain object of a model; and
predicting, using a processor, one or more specific predicted events based at least in part on the specific domain object, wherein the one or more specific predicted events are predicted using a specific predictor.

15. The media of claim 14, further comprising selecting one or more predicted next events from among the generic predicted events and the specific predicted events.
